# EUROPEAN PATENT SPECIFICATION

(11) **EP 4 517 130 B1**
(45) Date of publication and mention of the grant of the patent: **22.04.2026**
(21) Application number: 24195428.8
(22) Date of filing: 20.08.2024
(51) Int. Cl.: F16G 13/06, F16G 15/04

(54) **CHAIN**
KETTE
CHAÎNE DE CHAÎNE

(30) Priority: 31.08.2023 JP 2023141070
(43) Date of publication of application: 05.03.2025
(73) Proprietor: Tsubakimoto Chain Co., Osaka 530-0005 (JP)
(72) Inventor: Nakagoshiki, Keita, Osaka, 530-0005 (JP)
(74) Representative: dompatent

(56) References cited:
- AU-A1- 2022 209 296
- US-A1- 2005 164 816

## Description

### BACKGROUND OF THE INVENTION

### 1. Field of the Invention

The present invention relates to a chain composed of a plurality of pairs of inner link plates, a plurality of pairs of outer link plates, a plurality of pins fixed to the outer link plates, and a plurality of bushings fixed to or integral with the inner link plates, with the pins being inserted through the bushings.

### 2. Description of the Related Art

A chain made up of a plurality of pairs of inner link plates, a plurality of pairs of outer link plates, a plurality of pins fixed to the outer link plates, and a plurality of bushings fixed to or integral with the inner link plates, with the pins being inserted through the bushings, is typically formed in an endless loop in a bendable manner, with the pins each being firmly pressed into pin holes of the outer link plates.

Typically, for assembly or maintenance a joint part is provided at least at one site along such a chain, where the pin can be pulled out to open the chain loop or firmly fitted into the pin hole to form the chain into a loop.

US 2005/164816 A1 describes: A chain connecting device including a roller, a pair of inner chain plates, a pair of outer chain plates, a rivet and a fastener. The rivet has a hole at one end with inner threads for the fastener to be threaded therein. Both the rivet and the fastener each comprise an enlarged end to hold the inner chain plates and the outer chain plates together in a secure manner and to enhance the strength of the connection.

### SUMMARY OF THE INVENTION

Pulling out or inserting the pins in such a chain requires a large force because the pins are firmly fitted to prevent them from coming out of the pin holes in the outer link plates during use. Hence, special tools have been proposed to facilitate the removal and insertion of the pins (see, for example, Japanese Patent Application Publication No. 2003-175474 and Japanese Utility Model Application Publication No. H07-017475). There has been a problem in that it is impossible to perform assembly or maintenance in a preferred location due to the difficulty of removing or inserting the pins without these special tools.

The present invention addresses the problem in the prior art described above and provides a chain that allows easy removal and insertion of the pins without the use of a special tool so as to enable assembly or maintenance in a preferred location.

The chain according to the present invention is a chain including a plurality of pairs of inner link plates, a plurality of pairs of outer link plates, a plurality of pins fixed to the outer link plates, and a plurality of bushings fixed to or integral with the inner link plates, with the pins being inserted through the bushings. The plurality of pins includes at least one joint pin, and the joint pin includes an outer pin and an inner pin. The outer pin is cylindrical, and has an internal thread in an inner circumferential surface, and moreover is firmly fitted into a pin hole of one of a pair of the outer link plates. The inner pin includes an inserted portion having an external thread, which is inserted into the outer pin, and moreover having a head that protrudes from the outer pin. The inner pin includes a portion serving as a retainer that retains another outer link plate that is paired with the outer link plate, into which the outer pin is firmly fitted. The problem described above is thereby solved.

According to the chain set forth in claim 1, the outer pin is cylindrical, and has an internal thread in an inner circumferential surface, and moreover is firmly fitted into a pin hole of one of a pair of the outer link plates. The inner pin includes an inserted portion with an external thread, which is inserted into the outer pin, and a head that protrudes from the outer pin. The inner pin can be assembled to the outer pin with a screw fit, and the inner pin can be removed from the outer pin by loosening the threads. Thus, the pins can be removed and inserted without a special tool, which enables assembly or maintenance in any location.

The inner pin includes a portion serving as a retainer that retains the other outer link plate that is paired with the outer link plate, into which the outer pin is firmly fitted. Thus, the inner pin can be securely retained to the other outer link plate (on the side with the head of the inner pin) simply by screwing the inner pin into the outer pin.

According to the configuration set forth in claim 1, the portion serving as a retainer includes a flange protruding radially outward from the head, and the other outer link plate is sandwiched between an end edge of the outer pin and the flange. The other outer link plate (on the side with the head of the inner pin) can be securely retained simply by screwing the inner pin into the outer pin, and can be easily released by loosening the threads.

According to the configuration set forth in claim 2, the portion serving as a retainer includes a flange provided to the head, and the flange prevents the other outer link plate from coming off. With the flange of the inner pin preventing the outer link plate from coming off, the outer pin need only be fitted lightly to the other outer link plate (on the side with the head of the inner pin). The outer link plate can therefore be readily retained, and can easily be released by loosening the threads.

Moreover, the same type of outer link plate as other outer link plates can be used as the outer link plate on the side with the head of the inner pin.

According to the configuration set forth in claim 3, the portion serving as a retainer includes a taper surface provided to an outer periphery of the head, and the other outer link plate is sandwiched between an end edge of the outer pin on a side facing the other outer link plate and the taper surface. This enables an inner pin design where the head does not need to protrude to the side, thus reducing the overall width of the chain.

According to the configuration set forth in claim 4, the portion serving as a retainer includes a fitting surface on an outer periphery of the head, the fitting surface allowing the head to be pressed into a pin hole of the other outer link plate. This allows use of the same type of outer link plate as other outer link plates as the outer link plate on the side with the head of the inner pin.

According to the configuration set forth in claim 5, the internal thread is provided only to a portion of the outer pin on the outer link plate side onto which the outer pin is firmly fitted. This reduces the number of turns required for the inner pin, thereby improving the efficiency of disassembly and assembly work.

### BRIEF DESCRIPTION OF THE DRAWINGS

FIG. 1 is a perspective view of a chain according to a first embodiment of the present invention;
FIG. 2 is a perspective cross-sectional view of the chain according to the first embodiment of the present invention;
FIG. 3 is an exploded perspective view of a joint part of the chain according to the first embodiment of the present invention;
FIG. 4 is a front view of an inner pin and a cross-sectional view of an outer pin of the chain according to the first embodiment of the present invention;
FIG. 5 is a perspective view of a chain according to a second embodiment of the present invention;
FIG. 6 is a perspective cross-sectional view of the chain according to the second embodiment of the present invention;
FIG. 7 is a front view of an inner pin and a cross-sectional view of an outer pin of the chain according to the second embodiment of the present invention;
FIG. 8 is a perspective cross-sectional view of the chain according to a third embodiment of the present invention;
FIG. 9 is a front view of an inner pin and a cross-sectional view of an outer pin of the chain according to the third embodiment of the present invention;
FIG. 10 is a perspective cross-sectional view of the chain according to a fourth embodiment of the present invention;
FIG. 11 is a front view of an inner pin and a cross-sectional view of an outer pin of the chain according to the fourth embodiment of the present invention;
FIG. 12 is a perspective cross-sectional view of the chain according to a fifth embodiment of the present invention; and
FIG. 13 is a front view of an inner pin and a cross-sectional view of an outer pin of the chain according to the fifth embodiment of the present invention.

### DESCRIPTION OF THE PREFERRED EMBODIMENTS

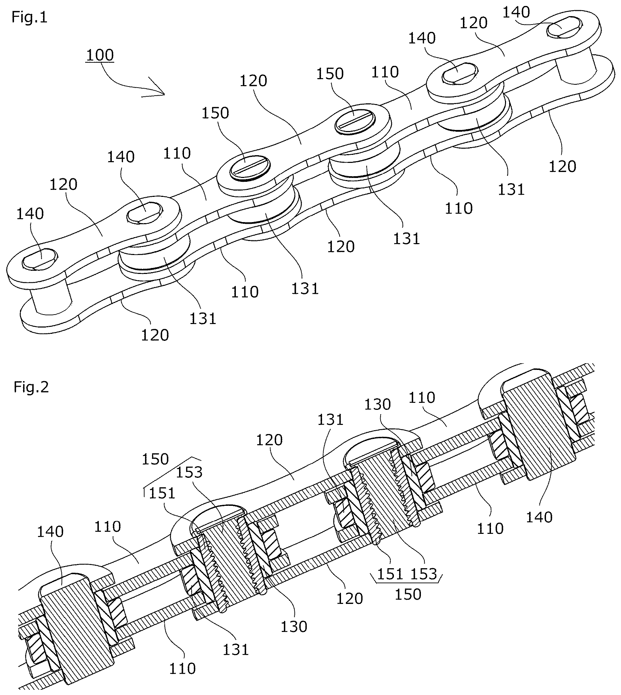

The chain 100 according to a first embodiment of the present invention includes a plurality of pairs of inner link plates 110, a plurality of pairs of outer link plates 120, a plurality of pins 140 fixed to the outer link plates 120, and a plurality of bushings 130 fixed to the inner link plates 110 for the pins 140 to be inserted, as shown in FIG. 1 to FIG. 4.

In this embodiment, the chain includes rollers 131 rotatably fitted on the bushings 130.

A joint pin 150 is used instead of the normal pin 140 in a joint part of the chain 100.

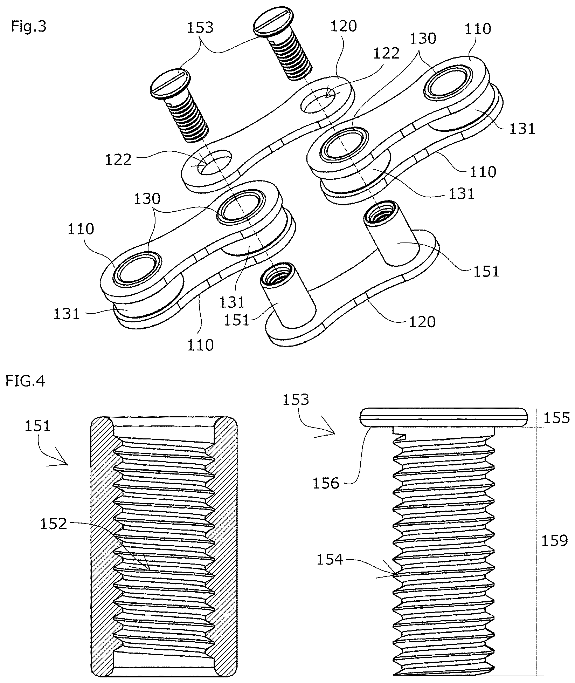

The joint pin 150 includes an outer pin 151 and an inner pin 153, as shown in FIG. 4.

The outer pin 151 is cylindrical and has an internal thread 152 while the inner pin 153 has an inserted portion 159 with an external thread 154, which is inserted into the outer pin 151, and a head 155 that protrudes from the outer pin 151 when inserted.

As shown in FIG. 3, the outer pin 151 has one end securely fitted into the outer link plate 120 on one side (opposite from the head of the inner pin), and the other end passed through a bushing 130 and fitted into the other outer link plate 120. The inner pin 153 is screwed into the outer pin 151.

The head 155 of the inner pin 153 is provided with a flange 156 as a portion serving as a retainer. The flange 156 is configured to prevent the other outer link plate 120 fitted to the outer pin 151 (on the side with the head of the inner pin) from coming off.

The flange, serving as the retainer, prevents separation of the outer link plate 120 during use and allows a reduced fitting force to be set between the outer pin 151 and the other outer link plate 120 (on the side with the head of the inner pin) to facilitate disassembly and assembly work.

The outer pin 151 can be designed to have the same outside diameter as that of the normal pin 140, allowing use of the normal outer link plate 120 in the joint part as well.

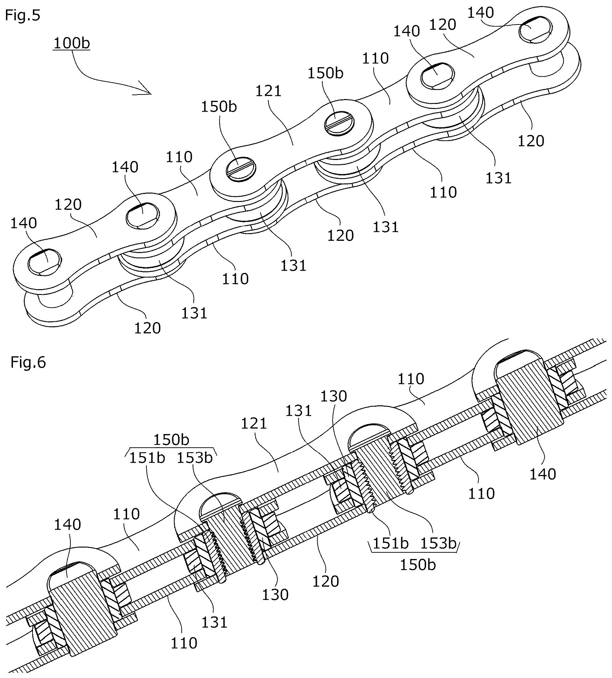

The chain 100b according to a second embodiment of the present invention includes a plurality of pairs of inner link plates 110, a plurality of pairs of outer link plates 120, a plurality of pins 140 fixed to the outer link plates 120, and a plurality of bushings 130 fixed to the inner link plates 110 for the pins 140 to be inserted, as shown in FIG. 5 to FIG. 7.

In this embodiment, the chain includes rollers 131 rotatably fitted on the bushings 130.

A joint pin 150b is used instead of the normal pin 140 in a joint part of the chain 100b. A joint plate 121 is used instead of the normal outer link plate 120 as one of the pair of outer link plates.

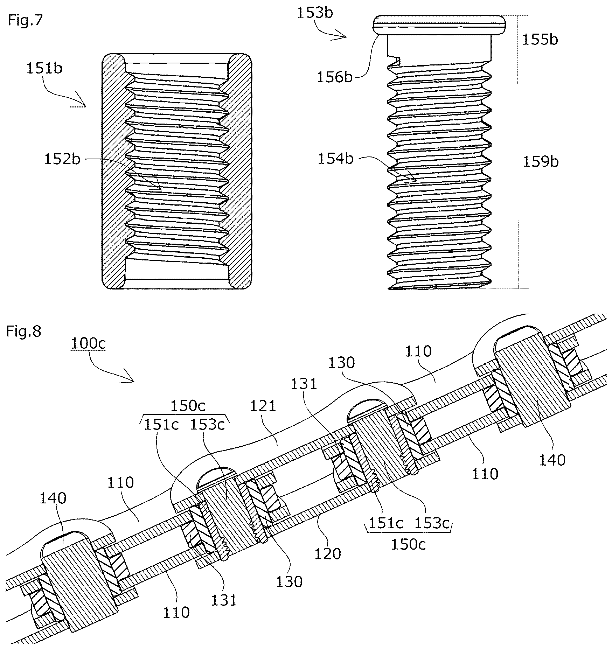

The joint pin 150b includes an outer pin 151b and an inner pin 153b, as shown in FIG. 7.

The outer pin 151b is cylindrical and has an internal thread 152b, while the inner pin 153b has an inserted portion 159b with an external thread 154b, which is inserted into the outer pin 151b, and a head 155b that protrudes from the outer pin 151b when inserted.

The outer pin 151b has one end securely fitted into the outer link plate 120 on one side (opposite from the head of the inner pin), and the other end passed through a bushing 130 and making contact with the joint plate 121. The inner pin 153b is screwed into the outer pin 151b.

The head 155b of the inner pin 153b is fitted into the joint plate 121. The head 155b includes a radially outwardly protruding flange 156b as a portion serving as a retainer. The joint plate 121 is sandwiched between an end edge of the outer pin 151b and the flange 156b.

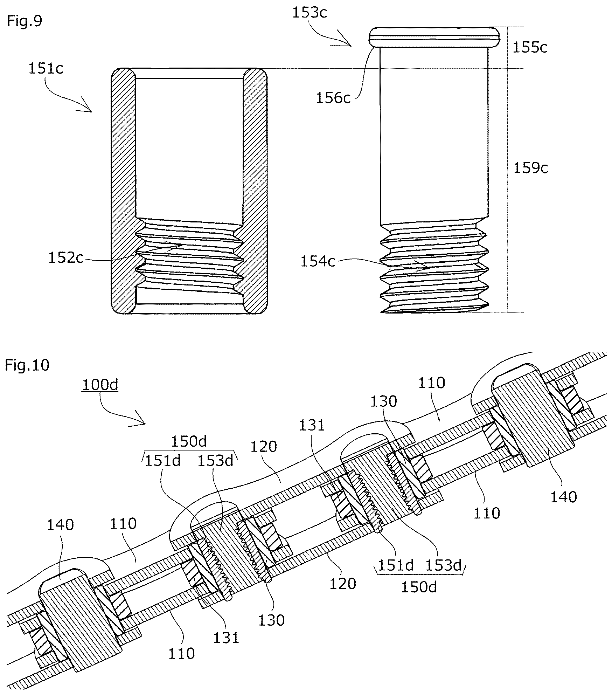

The chain 100c according to a third embodiment of the present invention includes a plurality of pairs of inner link plates 110, a plurality of pairs of outer link plates 120, a plurality of pins 140 fixed to the outer link plates 120, and a plurality of bushings 130 fixed to the inner link plates 110 for the pins 140 to be inserted, as shown in FIG. 8 and FIG. 9.

In this embodiment, the chain includes rollers 131 rotatably fitted on the bushings 130.

A joint pin 150c is used instead of the normal pin 140 in a joint part of the chain 100c. A joint plate 121 is used instead of the normal outer link plate 120 as one of the pair of outer link plates.

The joint pin 150c includes an outer pin 151c and an inner pin 153c, as shown in FIG. 9.

The outer pin 151c is cylindrical and has an internal thread 152c, while the inner pin 153c has an inserted portion 159c with an external thread 154c, which is inserted into the outer pin 151c, and a head 155c that protrudes from the outer pin 151c when inserted.

The outer pin 151c has one end securely fitted into the outer link plate 120 on one side (opposite from the head of the inner pin), and the other end passed through a bushing 130 and making contact with the joint plate 121. The inner pin 153c is screwed into the outer pin 151c.

The head 155c of the inner pin 153c is fitted into the joint plate 121. The head 155c includes a radially outwardly protruding flange 156c as a portion serving as a retainer. The joint plate 121 is sandwiched between an end edge of the outer pin 151c and the flange 156c.

In this embodiment, the internal thread 152c of the outer pin 151c and the external thread 154c of the inner pin 153c are provided only to a portion on one side closer to the outer link plate 120 (opposite from the head of the inner pin) in a necessary length. The number of turns required for the inner pin 153c when disassembling or assembling is therefore reduced, so that the work efficiency is improved.

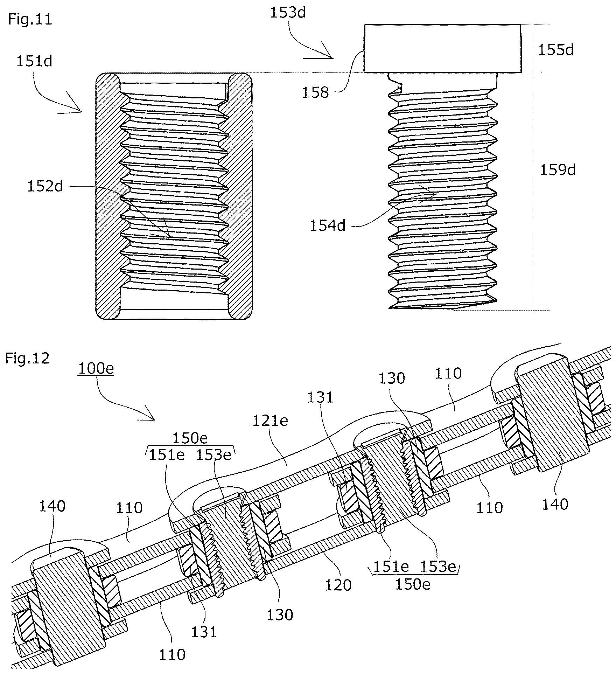

The chain 100d according to a fourth embodiment of the present invention includes a plurality of pairs of inner link plates 110, a plurality of pairs of outer link plates 120, a plurality of pins 140 fixed to the outer link plates 120, and a plurality of bushings 130 fixed to the inner link plates 110 for the pins 140 to be inserted, as shown in FIG. 10 and FIG. 11.

In this embodiment, the chain includes rollers 131 rotatably fitted on the bushings 130.

A joint pin 150d is used instead of the normal pin 140 in a joint part of the chain 100d.

The joint pin 150d includes an outer pin 151d and an inner pin 153d, as shown in FIG. 11.

The outer pin 151d is cylindrical and has an internal thread 152d, while the inner pin 153d has an inserted portion 159d with an external thread 154d, which is inserted into the outer pin 151d, and a head 155d that protrudes from the outer pin 151d when inserted.

The outer pin 151d has one end securely fitted into the outer link plate 120 on one side (opposite from the head of the inner pin). The inner pin 153d is screwed into the outer pin 151d.

The head 155d of the inner pin 153d has a fitting surface 158 that fits with a normal outer link plate 120 as a portion serving as a retainer. The inner pin is thus configured to be pressed into the other outer link plate 120 (on the side with the head of the inner pin).

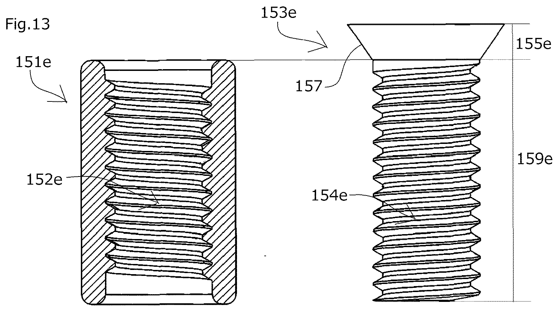

The chain 100e according to a fifth embodiment of the present invention includes a plurality of pairs of inner link plates 110, a plurality of pairs of outer link plates 120, a plurality of pins 140 fixed to the outer link plates 120, and a plurality of bushings 130 fixed to the inner link plates 110 for the pins 140 to be inserted, as shown in FIG. 12 and FIG. 13.

In this embodiment, the chain includes rollers 131 rotatably fitted on the bushings 130.

A joint pin 150e is used instead of the normal pin 140 in a joint part of the chain 100e.

The joint pin 150e includes an outer pin 151e and an inner pin 153e, as shown in FIG. 13.

The outer pin 151e is cylindrical and has an internal thread 152e, while the inner pin 153e has an inserted portion 159e with an external thread 154e, which is inserted into the outer pin 151e, and a head 155e that protrudes from the outer pin 151e when inserted.

The outer pin 151e has one end securely fitted into the outer link plate 120 on one side (opposite from the head of the inner pin), and the other end passed through a bushing 130 and making contact with the joint plate 121e. The inner pin 153e is screwed into the outer pin 151e.

The head 155e of the inner pin 153e has a taper surface 157 as a portion serving as a retainer, which fits with the joint plate 121e that has a tapered pin hole. The joint plate 121e is sandwiched between an end edge of the outer pin 151e and the taper surface 157.

Therefore, the head of the inner pin 153e does not need to protrude from the joint plate 121e. The overall width of the chain 100e can thus be reduced.

While the chain includes rollers 131 rotatably fitted on the bushings 130 in the embodiments described above, the chain need not necessarily include rollers.

The bushings 130 in the embodiments described above are separate from the inner link plates 110 and firmly fitted in the bushing holes of the inner link plates 110. Instead, the bushings may be integrally formed with the inner link plates 110.

While both of the two pins of one pair of outer link plates are joint pins in the embodiments described above, only one of the pins may be the joint pin. The joint part may be provided at a plurality of locations along the chain.

## Claims

1. A chain (100) comprising:
a plurality of pairs of inner link plates (110);
a plurality of pairs of outer link plates (120);
a plurality of pins (140) fixed to the outer link plates (120); and
a plurality of bushings (130) fixed to or integral with the inner link plates (110), with the pins (140) being inserted through the bushings (130),
the plurality of pins (140) including at least one joint pin (150),
the joint pin (150) including an outer pin (151) and an inner pin (153),
the outer pin (151) being cylindrical, and having an internal thread (152) in an inner circumferential surface thereof, and moreover firmly fitted into a pin hole of one of a pair of the outer link plates (120),
the inner pin (153) including an inserted portion (159) having an external thread (154), which is inserted into the outer pin (151), and moreover having a head (155) that protrudes from the outer pin (151),
the inner pin (153) including a portion (159) serving as a retainer that retains another outer link plate that is paired with the outer link plate (120), into which the outer pin (151) is firmly fitted,
**characterized in that**
the portion (159) serving as a retainer includes a flange (156) protruding radially outward from the head (155), and the other outer link plate (120) is sandwiched in direct contact between an end edge of the outer pin (151) and the flange (156).

2. The chain (100) according to claim 1, wherein the portion (159) serving as a retainer includes a flange (156) provided to the head (155), and the flange (156) prevents the other outer link plate (120) from coming off.

3. The chain (100) according to claim 1, wherein the portion (159) serving as a retainer includes a taper surface (157) provided to an outer periphery of the head (155), and the other outer link plate (120) is sandwiched between an end edge of the outer pin (151) on a side facing the other outer link plate (120) and the taper surface (157).

4. The chain (100) according to claim 1, wherein the portion (159) serving as a retainer includes a fitting surface (158) on an outer periphery of the head (155), and the fitting surface (158) allows the head (155) to be pressed into a pin hole of the other outer link plate (120).

5. The chain (100) according to any one of claims 1 to 4, wherein the internal thread (152) is provided only to a portion (159) of the outer pin (151) on the outer link plate side onto which the outer pin (151) is firmly fitted.

## Patentansprüche

1. Kette (100), die aufweist:
eine Vielzahl von Paaren innerer Kettenlaschen (110);
eine Vielzahl von Paaren äußerer Kettenlaschen (120);
eine Vielzahl von Stiften (140), die an den äußeren Kettenlaschen (120) befestigt sind; und
eine Vielzahl von Buchsen (130), die an den inneren Kettenlaschen (110) befestigt oder mit diesen einstückig ausgebildet sind, wobei die Stifte (140) durch die Buchsen (130) gesteckt werden,
wobei die Vielzahl der Stifte (140) mindestens einen Gelenkstift (150) aufweist,
wobei der Gelenkstift (150) einen äußeren Stift (151) und einen inneren Stift (153) aufweist,
wobei der äußere Stift (151) zylindrisch ist und ein Innengewinde (152) in seiner Innenumfangsfläche aufweist und darüber hinaus fest in ein Stiftloch einer eines Paares äußerer Kettenlaschen (120) eingepasst ist,
wobei der innere Stift (153) einen eingesetzten Abschnitt (159) mit einem Außengewinde (154) aufweist, der in den äußeren Stift (151) eingesetzt wird,
und darüber hinaus einen Kopf (155) aufweist, der aus dem äußeren Stift (151) herausragt,
wobei der innere Stift (153) einen Abschnitt (159) aufweist, der als Halterung dient, die eine andere äußere Kettenlasche hält, die mit der äußeren Kettenlasche (120) gepaart ist, in die der äußere Stift (151) fest eingepasst ist,
**dadurch gekennzeichnet, dass**
der als Halterung dienende Abschnitt (159) einen Flansch (156) aufweist, der vom Kopf (155) radial nach außen vorsteht, und die andere äußere Kettenlasche (120) in direktem Kontakt zwischen einer Endkante des äußeren Stifts (151) und dem Flansch (156) eingeklemmt ist.

2. Kette (100) nach Anspruch 1, wobei der Abschnitt (159), der als Halterung dient, einen Flansch (156) aufweist, der am Kopf (155) vorgesehen ist, und der Flansch (156) verhindert, dass sich die andere äußere Kettenlasche (120) löst.

3. Kette (100) nach Anspruch 1, wobei der als Halterung dienende Abschnitt (159) eine verjüngte Fläche (157) aufweist, die an einem Außenumfang des Kopfes (155) vorgesehen ist, und die andere äußere Kettenlasche (120) zwischen einer Endkante des äußeren Stifts (151) auf einer der anderen äußeren Kettenlasche (120) zugewandten Seite und der verjüngten Fläche (157) eingeklemmt ist.

4. Kette (100) nach Anspruch 1, wobei der als Halterung dienende Abschnitt (159) eine Passfläche (158) an einem Außenumfang des Kopfes (155) aufweist und die Passfläche (158) es ermöglicht, den Kopf (155) in ein Stiftloch der anderen äußeren Kettenlasche (120) zu drücken.

5. Kette (100) nach einem der Ansprüche 1 bis 4, wobei das Innengewinde (152) nur an einem Abschnitt (159) des äußeren Stifts (151) auf der Seite der äußeren Kettenlasche vorgesehen ist, an welcher der äußere Stift (151) fest angebracht ist.

## Revendications

1. Chaîne (100) comprenant :
une pluralité de paires de plaques de maillons internes (110) ;
une pluralité de paires de plaques de maillons externes (120) ;
une pluralité d'axes (140) fixés aux plaques de maillons externes (120) ; et
une pluralité de bagues (130) fixées aux plaques de maillons internes (110) ou faisant partie intégrante de celles-ci, les axes (140) étant insérés à travers les bagues (130),
la pluralité d'axes (140) comprenant au moins un axe d'articulation (150),
l'axe d'articulation (150) comprenant un axe externe (151) et un axe interne (153),
l'axe externe (151) étant cylindrique et présentant un filetage interne (152) dans une surface circonférentielle intérieure de celui-ci, et en outre fermement ajusté dans un trou d'axe de l'une d'une paire des plaques de maillons externes (120),
l'axe interne (153) comprenant une portion insérée (159) présentant un filetage externe (154), qui est inséré dans l'axe externe (151), et en outre présentant une tête (155) qui fait saillie depuis l'axe externe (151),
l'axe interne (153) comprenant une portion (159) servant de dispositif de retenue qui retient une autre plaque de maillons externes qui est appariée avec la plaque de maillons externes (120), dans laquelle l'axe externe (151) est fermement ajusté,
**caractérisée en ce que**
la portion (159) servant de dispositif de retenue comprend une bride (156) faisant saillie radialement vers l'extérieur depuis la tête (155), et l'autre plaque de maillons externes (120) est prise en sandwich en contact direct entre un bord d'extrémité de l'axe externe (151) et la bride (156).

2. Chaîne (100) selon la revendication 1, dans laquelle la portion (159) servant de dispositif de retenue comprend une bride (156) prévue sur la tête (155), et la bride (156) empêche l'autre plaque de maillons externes (120) de se détacher.

3. Chaîne (100) selon la revendication 1, dans laquelle la portion (159) servant de dispositif de retenue comprend une surface conique (157) prévue sur une périphérie externe de la tête (155), et l'autre plaque de maillons externes (120) est prise en sandwich entre un bord d'extrémité de l'axe externe (151) sur un côté faisant face à l'autre plaque de maillons externes (120) et la surface conique (157).

4. Chaîne (100) selon la revendication 1, dans laquelle la portion (159) servant de dispositif de retenue comprend une surface d'ajustement (158) sur une périphérie externe de la tête (155), et la surface d'ajustement (158) permet à la tête (155) d'être pressée dans un trou d'axe de l'autre plaque de maillons externes (120).

5. Chaîne (100) selon l'une quelconque des revendications 1 à 4, dans laquelle le filetage interne (152) est prévu uniquement sur une portion (159) de l'axe externe (151) du côté de la plaque de maillons externes sur lequel l'axe externe (151) est fermement ajusté.
